# EUROPEAN PATENT APPLICATION

(11) **EP 4 844 643 A1**
(43) Date of publication of application: **25.11.2026**
(21) Application number: 25178583.8
(22) Date of filing: 23.05.2025
(51) Int. Cl.: G06Q 10/00, G06F 40/174, G06Q 10/10, G06Q 40/08

(54) **A METHOD AND AN APPARATUS FOR GENERATING A DIGITAL ACCIDENT REPORT FOR A VEHICLE INVOLVED IN A VEHICLE ACCIDENT**

(71) Applicant: Bayerische Motoren Werke Aktiengesellschaft, 80809 München (DE)
(72) Inventor: Heidmann, Fanny, 80796 München (DE); Knott, Thorsten, 83104 Tuntenhausen (DE)

(57) **Abstract**

Embodiments relate to method (100) for generating a digital accident report for a vehicle involved in a vehicle accident. The method (100) involves obtaining (110) a digital accident report form. The method (100)further involves obtaining (120) accident-relevant data from a vehicle system of the vehicle involved in the vehicle accident. The method (100) further involves determining (130) a prefilling of one or more fields of the digital accident report for a user of the vehicle based on the obtained accident-relevant data. The method (100) further involves obtaining (140) a user confirmation input for the user of the vehicle.

## Description

The documentation of a vehicle accident may often rely on manual and paper-based processes, which may be time-consuming, error-prone, and stressful for vehicle users involved in an accident. Conventional procedures may require both involved parties to be physically present and to complete handwritten accident forms, which may lead to incomplete or inconsistent entries, particularly in situations where one party is injured, unavailable, or unable to provide information. In addition, the use of paper forms assumes the availability of the necessary physical materials, such as pens and printed forms, which may not always be present in a vehicle.

There may therefore be a need for an improved approach that enables a reliable, partially automated, and user-friendly generation of a digital accident report.

This need may be addressed by the method and apparatus as defined in the appended independent and dependent claims.

Embodiments relate to a method for generating a digital accident report for a vehicle involved in a vehicle accident. The method comprises obtaining a digital accident report form. The method further comprises obtaining accident-relevant data from a vehicle system of the vehicle involved in the vehicle accident. The method also comprises determining a pre-filling of one or more fields of the digital accident report for a user of the first vehicle of the vehicle based on the obtained accident-relevant data. The method further comprises obtaining a user confirmation input for the user of the first vehicle. This method may allow efficient and accurate reporting of vehicle accidents by automatically integrating data from the vehicle system and associating it with a specific user. By enabling structured and partially automated input, the process may reduce user workload and the potential for manual errors. The use of user confirmation input may further help ensure the authenticity and traceability of the report. Additionally, pre-filling fields based on vehicle data may accelerate the report generation process and improve the reliability of accident documentation, particularly in stressful or time-sensitive situations.

In one embodiment, the accident-relevant data may comprise at least one of vehicle-related information or user-related information. This allows flexible integration of different data sources depending on availability and use case.

In one embodiment, the accident-relevant data may be vehicle-related information based on vehicle sensor data. This enables the method to leverage available real-time technical data from the vehicle to populate report fields.

In one embodiment, determining the pre-filling of one or more fields may comprise processing the vehicle sensor data. This allows context-specific values to be derived and assigned automatically to the appropriate sections of the report.

In one embodiment, the sensor-derived data may be collected from at least one of the following: a weather condition sensor, a camera system, a radar sensor, a lidar sensor, an ultrasonic sensor, a velocity sensor, an acceleration sensor, a braking sensor, a microphone, a pressure sensor, an airbag deployment sensor, a steering angle sensor, an accelerator pedal sensor, an occupancy detection system, an AI-based environment detection system for surrounding vehicles or objects, a seatbelt usage detection system, or a vehicle defect monitoring system. These sensors enable the method to capture a comprehensive picture of the vehicle's state and surroundings at the time of the accident.

In one embodiment, the accident-relevant data may be captured by the vehicle sensor at the time of the vehicle accident. This supports temporal accuracy of the reported data and may ensure the relevance and reliability of automatically inserted information.

In one embodiment, the accident-relevant data may be user-related information, comprising at least one of personal identification data, insurance data, or driving license information. The ability to include user-related data may support seamless personalization and linking of reports to known profiles.

In one embodiment, the user-related information may be obtained by capturing an image of at least one of: personal identification data, insurance data, or driving license information; and performing data extraction on the captured image. This enables contactless or automated data collection via optical means, increasing convenience and reducing user input requirements.

In one embodiment, the user-related information may be obtained from a stored user profile of the user of the first vehicle. The method may thereby reuse known information and reduce redundancy in data entry.

In one embodiment, the method may further comprise sharing the at least partially filled accident report form with a second user of a second vehicle involved in the vehicle accident; and obtaining a user confirmation input for the second user. This supports collaborative input to a shared accident report and may reduce inconsistencies in parallel reporting by different parties.

In one embodiment, obtaining a user confirmation input from the first and/or second user may comprise at least one of: a manual input via a touchscreen interface, a biometric authentication-based input, or a certificate-based authentication. This enables flexible, secure, and context-appropriate verification methods to be used depending on the technical environment and legal requirements.

In one embodiment, the method may further comprise establishing a communication link to the vehicle system via at least one of the following communication channels: Bluetooth, WLAN, NFC, or a mobile network. This ensures that relevant data can be accessed even in varied or constrained connectivity conditions.

In one embodiment, the method may further comprise allowing the user of the first vehicle to edit the pre-filled accident report form. This provides flexibility and control to the user and may help correct or supplement automatically derived information.

In one embodiment, the method may further comprise transmitting the signed accident report form to at least one insurance company associated with the user of the first vehicle and/or the second user. This facilitates immediate follow-up processing and may reduce administrative overhead and delay.

Embodiments further relate to an apparatus for generating a digital accident report for a vehicle involved in a vehicle accident. The apparatus comprises interface circuitry configured to obtain a digital accident report form. The apparatus further comprises interface circuitry configured to obtain accident-relevant data from a vehicle system of the vehicle involved in the vehicle accident. The apparatus further comprises processing circuitry configured to determine a pre-filling of one or more fields of the digital accident report for a user of the first vehicle of the vehicle based on the obtained accident-relevant data. The interface circuitry is further configured to obtain a user confirmation input for the user of the first vehicle. This system architecture enables implementation of the described method by the apparatus. By enabling automatic data integration and user interaction, the apparatus may simplify the accident documentation process and improve accuracy and efficiency in post-incident workflows.

Some examples of apparatuses, methods and/or computer programs will be described in the following by way of example only, and with reference to the accompanying figures, in which
Fig. 1 illustrates a method for generating a digital accident report for a vehicle involved in a vehicle accident;
Fig. 2A schematically illustrates a first part of an example digital accident report form;
Fig. 2B schematically illustrates a second part of an example digital accident report form;
Fig. 2C schematically illustrates a third part of an example digital accident report form;
Fig. 3A schematically illustrates a first part of an example digital accident report form;
Fig. 3B schematically illustrates a second part of an example digital accident report form;
Fig. 3C schematically illustrates a third part of an example digital accident report form;
Fig. 4 schematically illustrates a flowchart for generating a digital accident report;
Fig. 5 schematically illustrates an example set of vehicle sensors that may be used to generate accident-relevant data;
Fig. 6 schematically illustrates a set of vehicle sensors that may contribute to the generation of accident-relevant data; and
Fig. 7 schematically illustrates the apparatus for generating a digital accident report for a vehicle involved in a vehicle accident.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

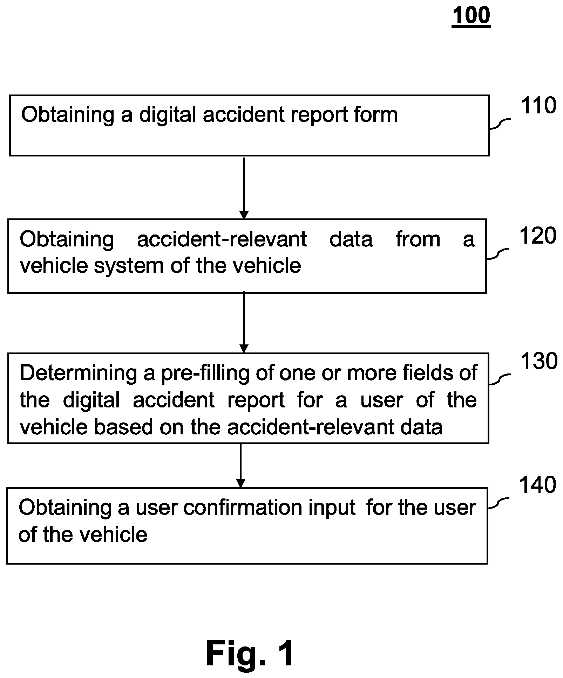

Fig. 1 illustrates a method for generating a digital accident report for a vehicle involved in a vehicle accident. For example, a vehicle may be a mobile transport unit configured to carry passengers, cargo, or both, and may be equipped with a propulsion system such as an internal combustion engine, an electric motor, or a hybrid drivetrain. A vehicle may include components such as a chassis, wheels, steering mechanism, braking system, onboard sensors, and electronic control units, and may support manual, semi-autonomous, or fully autonomous operation. A vehicle may further comprise digital systems for communication, navigation, and driver assistance, and may be capable of collecting operational and environmental data during use. Examples of a vehicle may be a passenger car such as a sedan or SUV, a commercial delivery van, a bus, a motorcycle, a ride-sharing vehicle, or an autonomous electric vehicle used for urban mobility. For example, a vehicle accident may be an event involving at least one vehicle during which a collision, physical impact, and/or unintended interaction with another object, person, and/or vehicle occurs. The vehicle accident may result in damage, injury, and/or disruption of normal operation. A vehicle accident may occur under different circumstances, such as on public roads, private property, or in traffic-related environments, and may involve multiple parties or be limited to a single vehicle. A vehicle accident may be detected or inferred for example, through an abrupt deceleration, airbag deployment, sensor data anomalies, and/or user input indicating an incident.

The method 100 comprises obtaining 110 a digital accident report form. For example, the obtaining the digital accident report form may refer to the apparatus performing the method 100, such as apparatus 700 retrieving the digital accident report form for further processing. The digital accident report form may be obtained from a storage medium of the apparatus 700 where it may be stored, such as a memory unit or a database. Alternatively, the digital accident report form may be obtained from an external source via a wired connection such as an electrical or optical data link, or via a wireless transmission, such as a radio-frequency communication protocol, an automotive network, or the like. For example, the digital accident report form may be obtained from a data server or from a vehicle system of the vehicle or the like (see below).

For example, the digital accident report form may be a structured, electronically accessible data entity that is configured store information related to a vehicle accident involving one or more users and/or vehicles. The digital accident report form may be implemented as a predefined data structure that includes a set of fields corresponding to relevant accident information, such as user identification, vehicle data, insurance details, accident location, time of occurrence, and circumstances of the event. The digital accident report form may contain fields that are intended to be filled in by one or more users, either manually or automatically, based on available data from user profiles, sensors, or stored records. In some examples, the digital accident report form may be implemented as a JSON object, an XML schema, a database record, or any other machine-readable data format that supports structured input and storage. The digital accident report form may include data fields organized in sections, for instance for personal data, vehicle data, damage description, diagrammatic accident sketch, and witness information.

The method 100 further comprises obtaining 120 accident-relevant data from a vehicle system of the vehicle involved in the vehicle accident. For example, the vehicle system may be a technical subsystem within the vehicle that is configured to perform a specific functional role using hardware and software integrated into the vehicle architecture. The vehicle system may comprise components for control, sensing, actuation, data transmission, and user interaction, and may operate autonomously or in cooperation with other vehicle systems. The vehicle system may also comprise one or more user-facing platforms, such as an infotainment system, a human-machine interface, or a display-based control environment, through which a user may input commands, receive visual feedback, or review status information. In some examples, the vehicle system may comprise a connected head unit that coordinates input from the touchscreen, the voice recognition interface, and the sensor data stream relevant for accident-related reporting.

In some examples, the method 100 may further comprise obtaining the accident-relevant data from an external source other than the vehicle system. For example, the apparatus 700 carrying out the method 100, may obtain the accident relevant data from its storage or via the interface circuitry from another external source like the internet or the like. For example, the apparatus 100 may be a smart device or a wearable device, such as a smart phone or a smart watch or a tablet or the like. For example, the apparatus 700 may provide user-related information such as the name, address, contact details, and/or insurance provider of the user, for example the driver, of the first vehicle. This accident-relevant data may be retrieved from locally stored user profiles, mobile applications associated with insurance services, or previously scanned documents stored on the apparatus. The accident-relevant data obtained from the apparatus may be used in addition or instead to the accident-relevant data from vehicle system and may enhance the completeness and flexibility of the accident report generation process.

In some examples, the method 100 further comprises establishing a communication link to the vehicle system, via at least one of the following communication channel: Bluetooth, WLAN, near-field communication (NFC), or a mobile network. The communication link may be enabled by apparatus 700 executing the method 700, such as such as a smartphone, tablet, or onboard computing unit. Via the communication link may accident-relevant data stored or generated by the vehicle system may be accessed. The vehicle system may include a combination of sensor platforms, control units, or user interfaces, such as an infotainment system or a touchscreen head unit. Establishing the communication link may allow to retrieve sensor-derived data, contextual metadata, or user profile information required for determining the pre-filling of one or more fields of the digital accident report. In some examples, the communication link may be established over a short-range channel such as Bluetooth or NFC, allowing direct peer-to-peer data exchange between a mobile device and the vehicle's onboard hardware. Alternatively, WLAN or a mobile network may be used to access vehicle backend services or cloud-hosted data repositories that interface with the vehicle system. The communication link may also be bidirectional, enabling not only the retrieval of accident-relevant data but also the transmission of form status, request for user inputs, or remote review functionality. Establishing this communication channel ensures that the vehicle's internal systems and external user applications can interoperate seamlessly for the automated, accurate, and authenticated generation of the digital accident report.

For example, the accident-relevant data may be data associated with the vehicle accident that is usable for describing the accident event. For example, accident-relevant may describe the accident from a technical, legal, and/or user-related perspective. For example, the accident-relevant data may comprise structured or unstructured data that characterizes the circumstances, participants, dynamics, and/or consequences of the vehicle accident.

In some examples, the accident-relevant data may comprise vehicle-related information. For example, the vehicle-related information may be accident-relevant data that originates from within the vehicle and/or relates to the vehicle and its technical subsystems. Vehicle-related information may describe the physical state, operational behavior, and/or environmental context of the vehicle, for example before, during, or after the vehicle accident. Vehicle-related information may be generated automatically by one or more vehicle systems without user input and may be used to represent dynamic or static parameters relevant for accident assessment. Vehicle-related information may include internal measurements, system status signals, control commands, or sensor observations recorded in real time or stored in buffers or logs. Vehicle-related information may further comprise data that reflects the interaction between the vehicle and its environment, such as obstacle detection, weather sensing, or road surface analysis. In some examples, vehicle-related information may include vehicle speed, longitudinal and lateral acceleration, steering angle, brake pressure, airbag activation time, tire pressure levels, seatbelt usage signals, radar-based object trajectories, or visual conditions derived from camera systems.

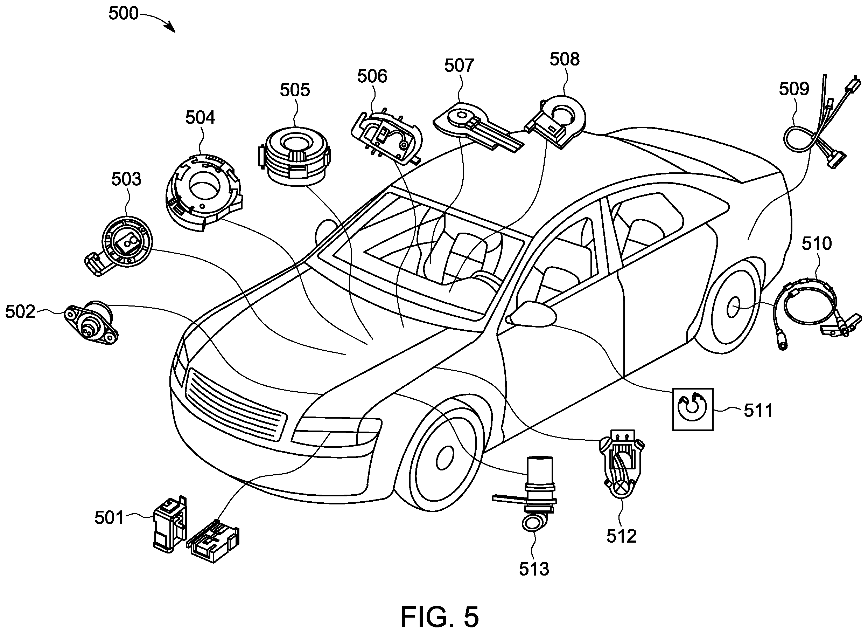

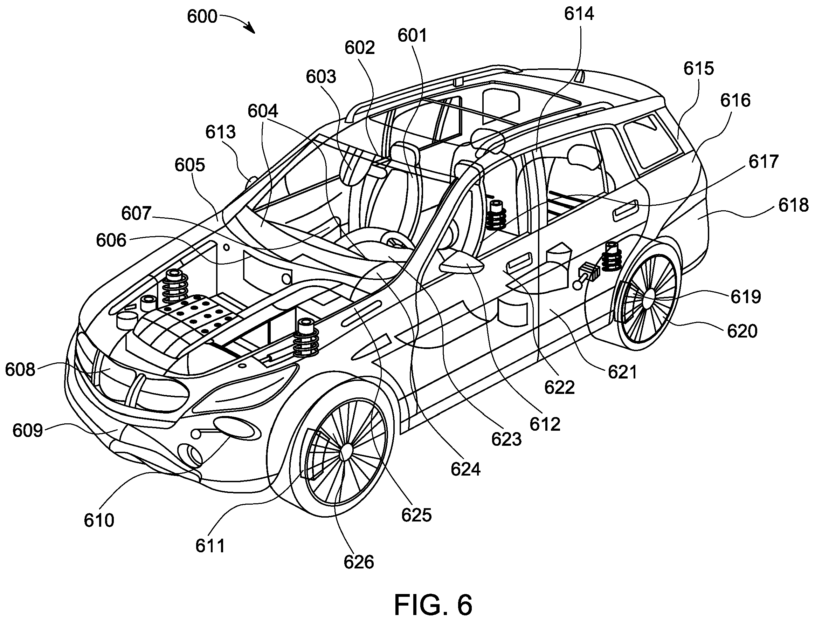

In some examples, the accident-relevant data may be vehicle-related information based on vehicle sensor data. For example, vehicle-related information based on vehicle sensor data may be accident-relevant data that is derived from one or more physical sensors integrated into the vehicle and that describes the physical state, operational behavior, and/or environmental context of the vehicle, for example before, during, or after the vehicle accident vehicle's. Vehicle sensor data may originate from active or passive sensors distributed across various vehicle subsystems and may include instantaneous or time-sequenced measurements such as acceleration, angular rate, force, distance, temperature, or visual patterns (see also below and Figs. 5 and 6). Vehicle-related information based on vehicle sensor data may be computed, interpreted, or formatted based on raw sensor signals and may be used to describe technical circumstances surrounding the accident in a structured manner. In some examples, vehicle-related information based on vehicle sensor data may include reconstructed braking force derived from brake pressure sensors, impact detection from acceleration profiles, object positions extracted from radar signals, or weather conditions inferred from windshield rain sensors.

In some examples, the accident-relevant data may comprise user-related information. For example, user-related information may be accident-relevant data that is associated with a user of the vehicle. For example, user-related information may be relevant for identifying the user, verifying the user's role or authorization, and/or describing user-specific aspects of the vehicle accident. The user of the vehicle may be a person who interacts with the vehicle in a role that involves access, operation, or presence in connection with the vehicle, either before, during, or after a vehicle accident. The user of the vehicle may include the person actively operating the vehicle, such as a driver, as well as any individual authenticated through a digital key, onboard profile, or recognized by the vehicle system as a permitted occupant. The user of the vehicle may be identified based on login credentials, biometric recognition, stored account information, or association with a particular device or digital key. In some examples, the user of the vehicle may be the person who initiates the creation of the digital accident report, confirms the pre-filled data, or provides a user confirmation input . Further, the user-related information may be retrieved from a stored user profile, extracted from captured documents, and/or received from an external digital service and may include personal data, legal identifiers, and/or account-linked attributes. User-related information may further support the population of form fields, assignment of responsibilities, or initiation of communication with external parties such as insurance providers. In some examples, user-related information may include the user's full name, address, date of birth, driver license number, insurance policy details, or digital key identifier.

In some examples, the accident-relevant data may be user-related information, comprising at least one of: personal identification data, insurance data, or driving license information. For example, personal identification data may be data that characterizes the identity of the user in a verifiable and legally recognized manner. Personal identification data may include elements such as full name, residential address, date of birth, nationality, or personal identification number. Personal identification data may be stored digitally, retrieved from a user profile, or captured by scanning physical documents that contain official identity information. Personal identification data may be available in the form of a government-issued document, such as a passport, a national identification card, a residence permit, or another identity certificate that meets regulatory or insurance-related standards.

For example, insurance data may be data that relates to the insurance status of the user and/or the vehicle at the time of the vehicle accident. Insurance data may include the name of the insurance provider, policy number, coverage status, validity period, or claims contact information. Insurance data may be stored in a digital user account, embedded in a vehicle-connected insurance module, or contained in physical or scanned documents such as an insurance certificate, a policy summary sheet, or a confirmation letter issued by the insurer. Insurance data may also be accessible through a mobile application, or a secure online portal operated by the insurance provider. This type of data may be used to verify insurance coverage at the time of the vehicle accident and to enable automated transmission of the digital accident report to the appropriate insurance entity.

For example, driving license information may refer to officially issued documentation certifying the user's authorization to operate a specific class of vehicle and may include the license number, issuing authority, expiration date, and permitted vehicle categories. Driving license information may be retrieved from a stored user profile, accessed through a linked transport authority system, or obtained by scanning a physical license using an image capture device. Driving license information may be available in the form of a physical card, a digital driving license stored in a mobile application, or a certified electronic document issued by a governmental agency. This type of user-related information may support the legal and procedural processing of the accident report and may be required for initiating communication with insurers, transport authorities, or other third parties.

In some examples, the user-related information may be obtained by capturing an image of at least one of: personal identification data, insurance data, or driving license information. For example, capturing an image of personal identification data, insurance data, or driving license information may comprise acquiring a photograph, scan, or live camera frame of a document that contains such data, using for example a device-integrated imaging system of the apparatus 700, such as a camera. For example, the image may be captured by a camera sensor of the vehicle, such as a dashboard camera, or an interior vehicle camera. The image may be captured under user guidance or automatically triggered during the digital accident report workflow. The captured image may represent a physical driver's license, an insurance certificate, or a government-issued identification card, and may be stored in a temporary buffer or pre-processed to enhance visibility, contrast, or alignment.

The method 100 may further comprise performing data extraction on the captured image. In some examples, performing data extraction on the captured image may comprise applying optical character recognition techniques and document layout analysis to identify and digitize textual content embedded in the image. The data extraction may be carried out using classical OCR engines such as Tesseract or ABBYY FineReader, or using deep learning-based methods such as convolutional neural networks (CNNs) trained for scene text recognition. Additional processing may comprise form field detection using key-value pair extraction, named entity recognition (NER) to isolate user attributes, and confidence scoring to validate extracted values. **In** some examples, the method 100 may further comprise verifying the extracted user-related information by cross-checking it against predefined templates or external databases.

In some examples, the user-related information may be obtained from a stored user profile of the user of the vehicle. For example, obtaining user-related information from a stored user profile of the user of the vehicle may comprise accessing the vehicle system. For example, obtaining user-related information from a stored user profile of the user of the vehicle may comprise accessing a data structure associated with an individual who has previously interacted with or been authenticated by the vehicle system. The stored user profile of the user of the vehicle may reside within the vehicle's infotainment system, a mobile application such as a connected app, or a cloud-based account platform linked to the user. The stored user profile of the user of the vehicle may contain validated or user-provided entries that are used during normal vehicle operation and may include personal identification data, insurance data, and driving license information. The retrieval of the stored user profile of the user of the vehicle may be triggered automatically during the generation of the digital accident report, for example, when the user logs into the vehicle system, pairs a recognized digital key, or confirms identity through biometric or PIN-based authentication. In some examples, the user-related information stored in the stored user profile of the user of the vehicle may be structured as a key-value database, a JSON object, or an encrypted local profile file. The stored user profile of the user of the vehicle may be populated during the initial setup of the vehicle account, synchronized from a mobile companion app, or updated through regular interactions with the infotainment system. The obtaining of the user profile data may comprise selective access to the needed fields required for the digital accident report, and may involve rule-based logic or machine learning to determine field relevance based on accident type or jurisdictional requirements. In some examples, the stored user profile of the user of the vehicle may be linked to external databases or cloud services to ensure the accuracy and completeness of the information before it is used to populate the report.

The method 100 further comprises determining 130 a pre-filling of one or more fields of the digital accident report for a user of the vehicle based on the obtained accident-relevant. As described above, the user of the vehicle may be the person who interacts with the vehicle in a role that involves access, operation, or presence in connection with the vehicle, either before, during, or after a vehicle accident. For example, the user of the vehicle may be the driver of the vehicle during the accident.

For example, the pre-filling may refer to a structured data assignment determined for some or all fields of the digital accident report form. For example, each field may be associated with a value derived, inferred, or selected based on the accident-relevant data. The pre-filling may be determined by analyzing the obtained accident-relevant data and identifying specific field-value pairs that match the semantic and data type expectations of the digital accident report. The pre-filling may represent a set of assignments for a subset of fields whose content may be resolved using available information, and may be used to define a pre-populated state of the digital accident report prior to user interaction. In some examples, a pre-filling may be generated using a rule-based mapping engine, a context-aware data extraction module, or a machine learning model trained to associate structured accident-relevant data with designated report fields. The determination of the pre-filling may include executing a field-matching algorithm that identifies correspondences between field descriptors and data parameters using string similarity, field ontologies, or embedding-based semantic comparisons. The pre-filling may be defined in accordance with standardized data schemas and report templates to ensure structural compatibility. The generation of a pre-filling may include assigning confidence levels to field-value mappings, allowing for selective user review and confirmation. The resulting pre-filling may represent a completed or partially completed dataset for the digital accident report form that serves as the basis for further interaction, editing, or transmission.

For example, determining a pre-filling of one or more fields of the digital accident report may comprise executing a sequence of processing steps that include parsing the structure of the digital accident report form, identifying the semantic function of each field, assigning candidate values based on the accident-relevant data, and generating a confidence-based mapping. The method may comprise parsing a machine-readable representation of the digital accident report form, for example in JSON, XML, or a predefined schema. Each field of the digital accident report form may be assigned a field identifier, a label, a data type, and a semantic tag. The semantic tag may describe the intended function of the field, such as accident time, driver name, vehicle speed, or insurance policy number. The semantic tag may be extracted from metadata annotations or may be inferred using a pretrained classification model, such as a support vector machine or a transformer-based model fine-tuned on structured accident report data.

In some examples, the method may comprise accessing a semantic knowledge base or ontology that links the semantic tags of the report fields to data types contained in the accident-relevant data. Based on these semantic associations, the method may further comprise traversing the available accident-relevant data to identify one or more candidate values corresponding to each semantically tagged field. The method may include performing field matching using deterministic rule-based logic, such as checking for string equivalence, key similarity, or standardized identifiers. Alternatively, the method may comprise performing semantic similarity matching using embedding-based models, for example using vector similarity calculated from Sentence-BERT or similar encoders trained to represent labels and values in a shared semantic space. The method may include applying a threshold to the match score, and assigning a value to a field only if the score exceeds the defined threshold or if the data source is flagged as reliable.

In some examples, the method may further comprise applying disambiguation logic in cases where multiple candidate values are available for a field. The disambiguation may be performed using a priority hierarchy, source credibility scoring, or temporal metadata, such as preferring more recent values or values from trusted input channels. For example, if both a scanned driver license and a user profile contain a name, the method may comprise selecting the value from the source with higher recency or source trust rating. In some cases, the method may also include evaluating the internal consistency of the data by comparing related fields.

The method may additionally comprise assigning a confidence score to each candidate field-value assignment, based on parameters such as the reliability of the data source, the method of extraction, and the degree of semantic alignment. The method may include marking each field in the digital accident report form with a confidence-based status, such as auto-filled, requires confirmation, or blank. The result of the determining step may be a structured mapping of form fields to values, forming a pre-filling that represents a completed or partially completed version of the digital accident report. This pre-filling may be used in subsequent steps for presentation to the user, review, editing, or digital signing. The method may optionally comprise logging the assignment steps for audit purposes or generating metadata that tracks the provenance of each filled field.

The method 100 further comprises obtaining 140 a user confirmation input for the user of the first vehicle. For example, a user confirmation input for the user of the first vehicle may be an input provided by the user of the first vehicle of the vehicle for the purpose of verifying the user's identity and confirming the user's association with the generated digital accident report. The user confirmation input may serve as a binding element that links the content of the report to an authenticated individual, thereby enabling legal traceability, ensuring data integrity, and supporting procedural validity in subsequent processing steps such as transmission to insurance systems or legal entities. In some examples, the user confirmation input may be a biometric input, a cryptographic input, or a manually entered input that can be used to uniquely identify or verify the user of the first vehicle. In some examples, the user confirmation input may comprise digital signing the accident report form. The user confirmation input may include a handwritten signature on a touchscreen, a fingerprint captured via a biometric sensor, a facial recognition sample matched against a stored template, a PIN code or password entered on a secure interface, or a digital certificate associated with the user profile of the user of the first vehicle. The user confirmation input may also be derived from existing vehicle context, such as successful login to the infotainment system using a digital key, authenticated session via a paired mobile device, or previously stored user credentials associated with the current usage session.

The method 100 may comprise initiating the request for the user confirmation input once the digital accident report has been pre-filled and optionally reviewed or edited by the user of the first vehicle. The verification result may be used to mark the report as authenticated, finalize the report state, and allow subsequent actions such as submission, signing, or secure storage. In some examples, the method 100 may further comprise storing a timestamp, a digital signature object, or a cryptographic hash that binds the report content to the user confirmation input , ensuring that the content cannot be altered undetected after authentication. The user confirmation input may provide proof that the user of the first vehicle has reviewed and approved the pre-filled content. It may further help establish legal or procedural accountability in case of disputes or investigations, and it may enable downstream systems, such as insurance providers, to verify the origin and validity of the report. Further, obtaining a user confirmation input may support privacy and data protection compliance by ensuring that sensitive personal data included in the report is released only with explicit and verified user consent.

In some examples, obtaining a user confirmation input from the user of the first and/or second vehicle (see below) comprises at least one of: a manual input via a touchscreen interface, a biometric authentication-based input, or a certificate-based authentication. The method 100 may support multiple authentication modalities. In some examples, the method 100 may allow the user to select an available authentication mechanism, or may automatically select a method based on predefined policy rules or technical capabilities of the vehicle or device in use. In some examples, a manual input via a touchscreen interface may comprise a user-drawn signature using a finger or stylus on a capacitive display surface, such as that of a vehicle infotainment system or a mobile device. The method may comprise rendering a signature field on the screen and capturing input as a sequence of time-stamped x/y coordinates. The method 100 may further comprise generating a bitmap image or a vector-based path, which is then stored together with metadata such as the time of signing and the user identity. In other implementations, the manual input may include entry of a personal identification number (PIN) or password into a secure virtual keypad. These manual inputs may be verified either by comparing them to pre-stored patterns or by accepting them as consent declarations with audit logging for traceability.

In some examples, a biometric authentication-based input may comprise capturing a biometric characteristic of the user using a vehicle-integrated or device-based biometric sensor. The biometric input may include a fingerprint scan using a capacitive or optical sensor integrated into the vehicle HMI, a facial recognition image captured using an interior camera, or a voiceprint recorded via a vehicle microphone. The method 100 may comprise matching the captured biometric sample against a pre-enrolled biometric template stored either locally or on a secure authentication backend. The matching algorithm may use established biometric verification techniques such as minutiae matching (for fingerprints), deep convolutional embeddings (for face recognition), or dynamic time warping (for voice). Upon successful verification, the method may proceed to mark the report as authenticated and store a reference to the biometric verification event in the audit trail.

In some examples, a certificate-based authentication may comprise verifying a digital certificate associated with the first or second user, where the certificate serves as a cryptographic credential that can be used to prove identity and integrity. The method 100 may comprise accessing a public key infrastructure (PKI) or a vehicle-based certificate management system that stores and issues user-specific certificates. The user may digitally sign the accident report using a private key stored in a secure element on their mobile device, a smart card, or a secure enclave in the vehicle system. The method may include generating a digital signature using algorithms such as RSA, ECDSA, or Ed25519 and attaching it to the accident report together with the corresponding certificate chain. Verification may be performed locally or by a backend system, validating the signature and confirming that the certificate has not expired or been revoked. This method 100 may provide high assurance and non-repudiation, especially for legally binding or insurance-critical use cases.

The above-described method 100 enables the automated generation of a structured digital accident report by systematically acquiring accident-relevant data from vehicle systems and processing that data to determine a pre-filling of specific report fields. The method 100 facilitates the extraction, classification, and assignment of context-specific parameters, such as vehicle sensor outputs or user-related information, into semantically matched data fields without requiring manual entry. This allows for a rule-based or machine learning-based execution path that transforms raw or structured input into a field-to-value mapping, thereby enabling a partially or fully pre-populated report instance. The pre-filling introduces semantically aligns the input data with reporting requirements, resulting in reduced latency, minimized interaction steps, and increased data consistency across submissions.

The above-described method further allows the incorporation of a user confirmation input as a binding mechanism between the report content and the verified identity of the user of the vehicle. The authentication input may be obtained through multiple modalities, including biometric recognition, touchscreen input, or certificate-based cryptographic verification, and may be validated using hardware-accelerated security features or external authentication services. This ensures that the final digital accident report is associated with a traceable and authenticated user identity, while simultaneously supporting secure submission workflows.

Coming back to the accident-relevant data which is vehicle-related information based on vehicle sensor data. In some examples, the sensor-derived data may be collected from at least one of the following sensors of the vehicle: a weather condition sensor, a camera system, a radar sensor, a lidar sensor, an ultrasonic sensor, a velocity sensor, an acceleration sensor, a braking sensor, a microphone, a pressure sensor, an airbag deployment sensor, a steering angle sensor, an accelerator pedal sensor, an occupancy detection system, an AI-based environment detection system for surrounding vehicles or objects, a seatbelt usage detection system, or a vehicle defect monitoring system. The weather condition sensor may detect rain, fog, snow, or temperature conditions using rain sensors, humidity sensors, temperature sensors, or barometric pressure sensors. These values may be used to pre-fill the weather conditions section of the digital accident report form. The camera system may capture visual data of the environment, other vehicles, lane markings, or damage to the vehicle body, and may be used for automatic image-based detection of visible damages, recognition of traffic signs, detection of intersections or landmarks, and license plate reading. This data may support pre-filling of fields such as "Location," "Damage description," or "Vehicles involved."

The radar sensor may provide relative distance and velocity measurements of surrounding vehicles or objects and may be used to infer lane presence, overtaking maneuvers, or collisions with moving objects. The lidar sensor may provide precise three-dimensional mapping of the surroundings and may assist in reconstructing accident geometry, identifying surrounding vehicles, and detecting static objects or infrastructure. The ultrasonic sensor may detect close-range objects or obstacles, often during low-speed maneuvers such as parking or reversing. Data from ultrasonic sensors may be used to infer whether the vehicle was entering or exiting a parking area, or to assess proximity to surrounding objects before an accident.

The velocity sensor may report the vehicle's speed at the moment of the accident or leading up to it, and may be used to populate the "Speed at time of accident" field. The acceleration sensor may capture longitudinal and lateral acceleration or deceleration, which may indicate the intensity of the impact or sudden maneuvers such as emergency braking or evasive steering. The braking sensor may detect the timing and intensity of brake application, supporting fields related to driver behavior or evasive action prior to collision. The microphone may capture sound patterns, such as collision noise, horn use, or external auditory events, and may serve as supplementary evidence for event detection.

The pressure sensor may monitor internal components such as brake or tire pressure, and abnormal pressure values may support pre-filling fields related to mechanical conditions prior to the accident. The airbag deployment sensor may provide a binary or timestamped indication of airbag deployment, which may be used to infer the severity of the impact and support fields related to collision confirmation or injury risk. The steering angle sensor may capture the angular position of the steering wheel and may be used to determine directional intent, turning maneuvers, or loss of control, all of which may support fields relating to driving circumstances.

The accelerator pedal sensor may indicate throttle input and can be used to detect acceleration events or changes in speed leading up to the accident. The occupancy detection system may identify the number and position of occupants in the vehicle, as well as their seating configuration, which may support injury-related fields or confirm the presence of users. The AI-based environment detection system for surrounding vehicles or objects may combine inputs from multiple sensors (e.g., cameras, radar, lidar) to detect and classify nearby vehicles, pedestrians, or road elements. This data may be used to populate fields regarding vehicle surroundings, contributing factors, or multi-vehicle involvement.

The seatbelt usage detection system may detect whether each occupant was wearing a seatbelt at the time of the accident, and may help assess potential injury risk or confirm compliance with safety requirements. The vehicle defect monitoring system may provide diagnostic information on known or developing vehicle faults, such as brake system errors or tire wear, which may be relevant for documenting the vehicle's technical state prior to the accident.

In some examples, the sensor-derived data from the vehicle may be cryptographically signed by the vehicle to ensure the authenticity, integrity, and provenance of the data used in the digital accident report. The signing process may comprise generating a digital signature using a private key stored securely within the vehicle's trusted platform module or hardware security module. The signature may be computed over a structured dataset that includes selected sensor outputs, such as vehicle speed, acceleration, steering angle, or airbag deployment status, together with a timestamp and a vehicle identifier. The corresponding public key may be verifiable by third parties, such as insurance companies or legal authorities, allowing them to confirm that the sensor data originated from a specific vehicle and has not been altered after collection. In some implementations, the signature may be appended directly to the accident-relevant data structure or embedded as metadata within the digital accident report, thereby enabling secure and verifiable transmission of vehicle-collected evidence.

In some examples, the determining the pre-filling of the one or more fields comprises processing the vehicle sensor data. In some examples, determining the pre-filling of one or more fields of the digital accident report may comprise processing the vehicle sensor data to extract structured, interpretable values that can be mapped to specific fields of the report form. This may comprise decoding, filtering, or aggregating raw sensor outputs such as accelerometer values, braking events, steering angle changes, or airbag deployment triggers. This may further comprise time-aligning data streams from multiple sensors to reconstruct the vehicle's behavior immediately before and during the accident. The processed sensor data may then be classified or semantically labeled according to predefined templates or machine learning models, for example by detecting a hard brake event based on threshold deceleration or confirming an impact based on airbag deployment signals. The method 100 may then map these processed outputs to corresponding fields in the digital accident report form, such as vehicle speed, direction of travel, impact severity, or occurrence of evasive maneuvers, thereby enabling automated and data-backed pre-filling of the report content.

In some examples, the accident-relevant data may be captured by the vehicle sensor at the time of the vehicle accident. The method may comprise recording or storing sensor data at the moment of impact, or within a predefined time window surrounding the event, such as several seconds before and after collision detection or airbag deployment. The timing of the data capture may be based on a trigger event, for example, a sudden deceleration detected by an accelerometer, the activation of crash sensors, or the deployment of restraint systems. Capturing data at the time of the vehicle accident may ensure that the information reflects the actual physical and environmental conditions present during the incident, and may improve the accuracy and forensic value of the resulting digital accident report. The captured data may include high-resolution snapshots of parameters such as vehicle speed, steering input, braking force, yaw rate, and external object detection, which may then be processed and used for determining a pre-filling of relevant report fields.

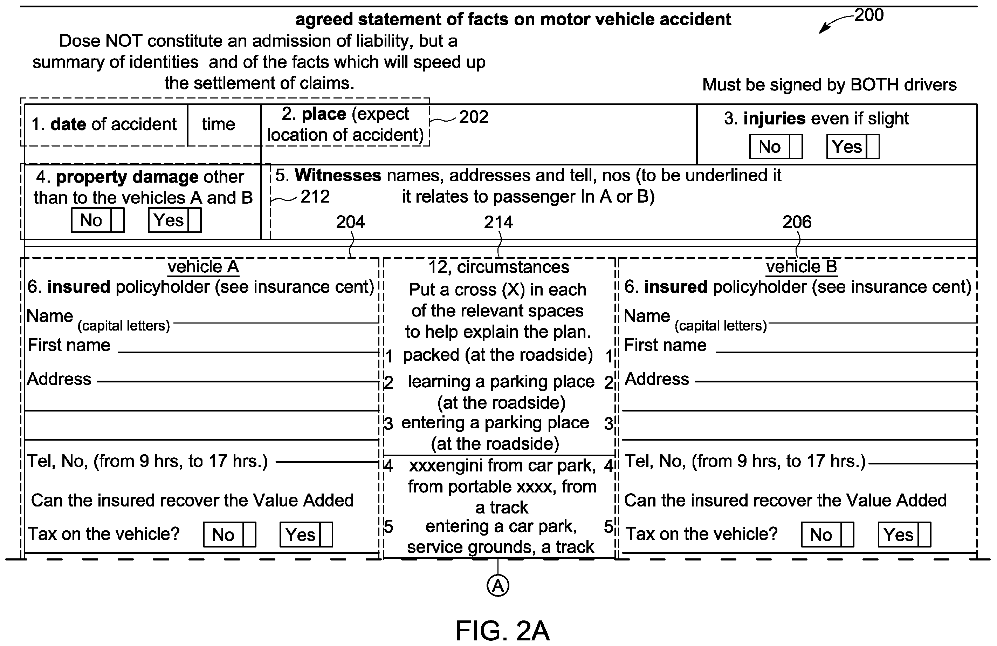

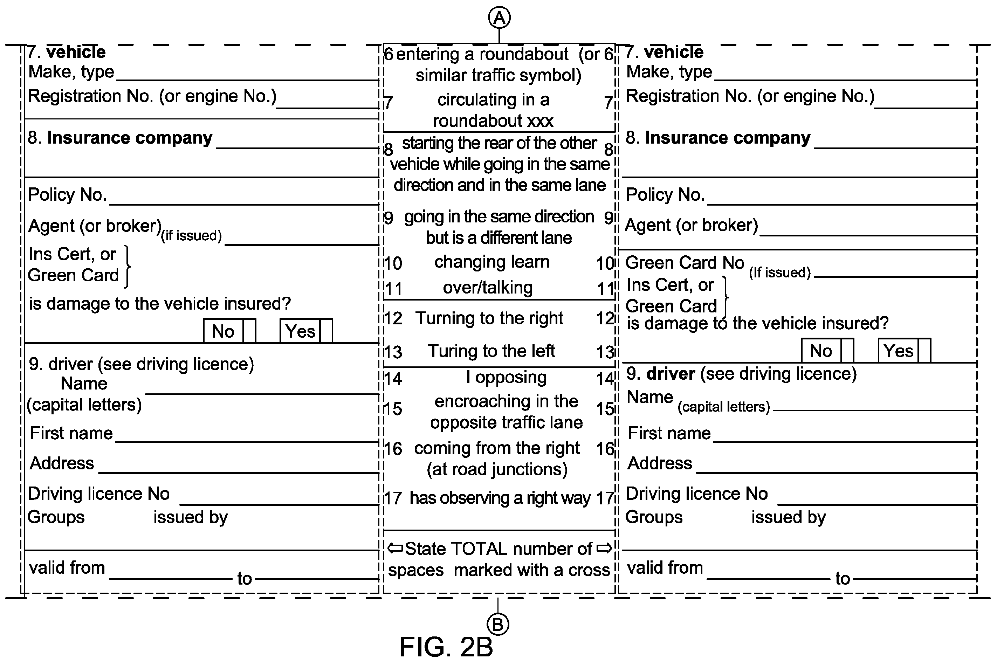

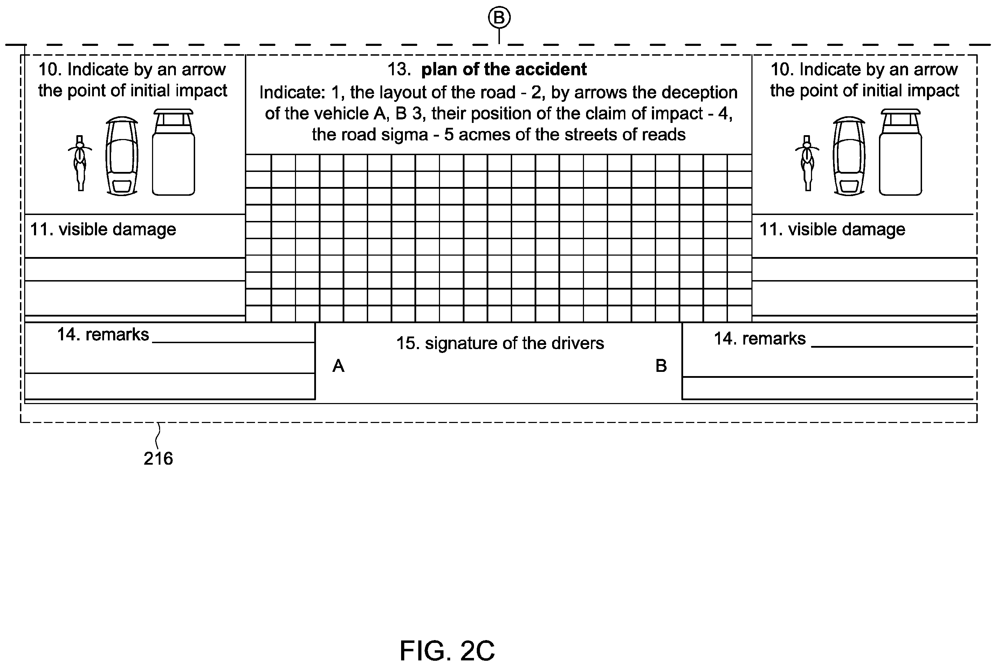

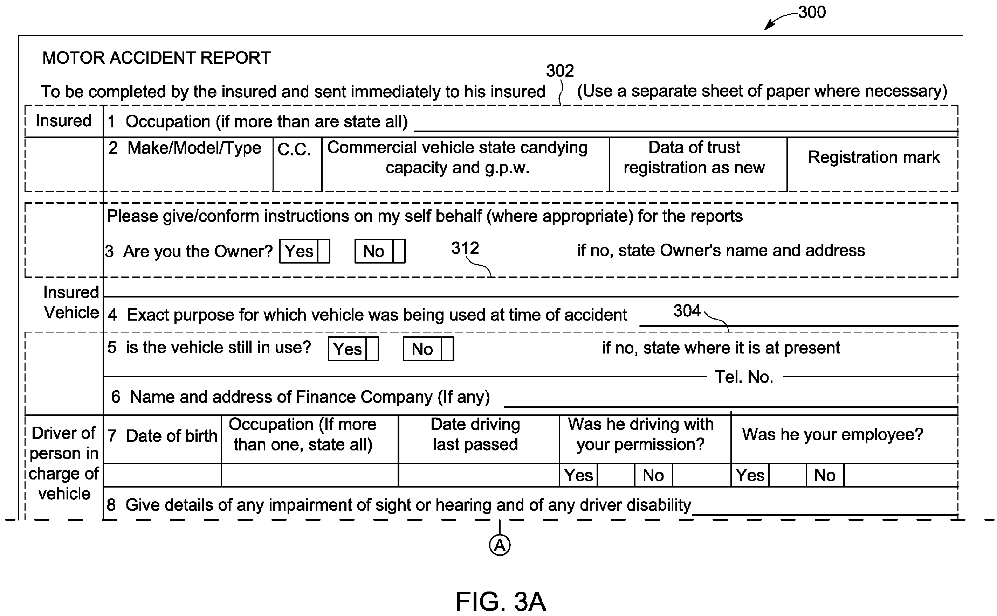

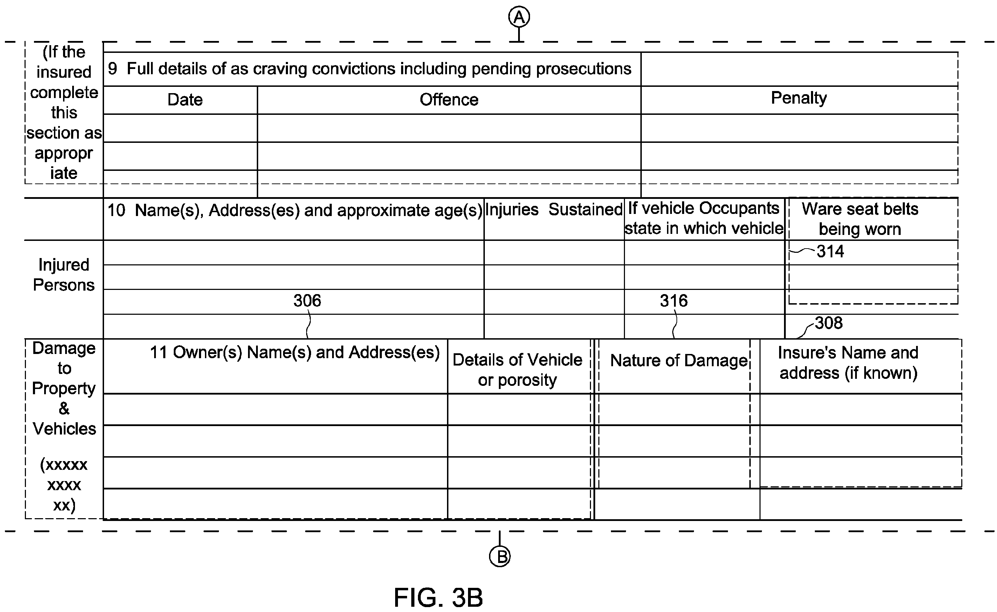

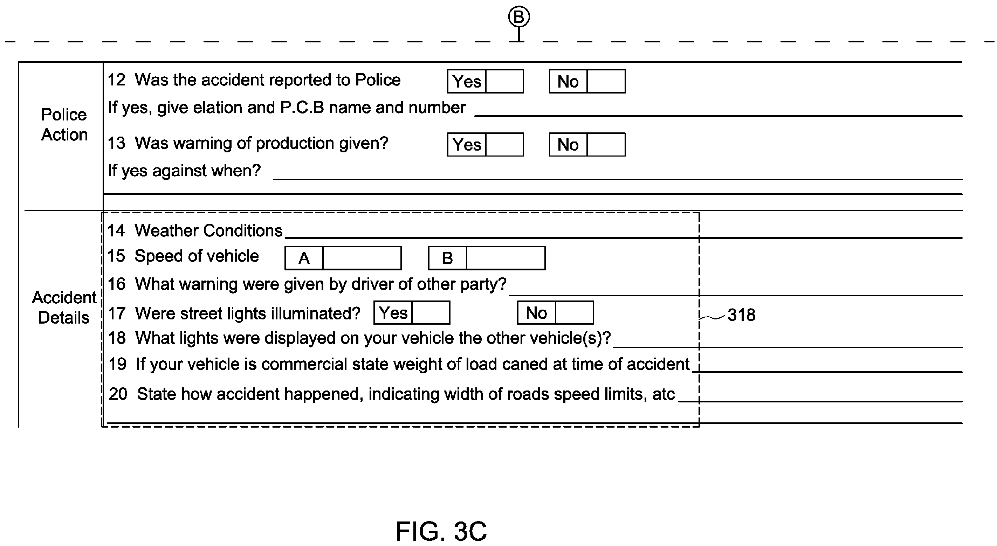

In some examples, the accident-relevant data used for generating the digital accident report may be derived from a wide variety of vehicle systems, sensors, and context-aware data sources connected vehicles (see also Figs. 5, 6). For example, the accident report form may comprise fields such as (see also Figs. 2, 3 below), location, environmental conditions, vehicle identification, injuries, damages, and driving circumstances. These fields may be pre-filled based on sensor signals and system states. The method 100 may thus utilize existing data streams within the vehicle architecture to determine the pre-filling of the report, thereby minimizing manual input and increasing the accuracy, consistency, and completeness of the resulting digital accident report. **In** some examples, the accident-relevant data may comprise temporal and location-related information characterizing the accident event. The date and time of the accident may be derived directly from the vehicle's internal clock system or GPS time data. The geographic location of the vehicle at the time of the accident may be determined using GPS signals and, in some examples, enriched with map-based post-processing to infer the nearest intersection, street name, or recognizable landmarks. Location metadata may further include administrative information such as country, city, and road designation. These values may be stored as coordinates, semantic descriptors, or geohash references in the accident report form.

In some examples, the accident-relevant data may include environmental conditions at the time of the accident. Weather-related parameters may be derived from vehicle-integrated sensors, such as rain sensors, outside temperature sensors, and barometric pressure sensors, and may be classified as clear, rainy, snowy, foggy, or otherwise. Ambient lighting conditions may be captured using ambient light sensors, providing indications of daylight, dusk, night, or artificial street illumination. These environmental descriptors may be used for pre-filling structured weather and visibility sections of the digital accident report.

In some examples, the accident-relevant data may comprise vehicle-related identification information. The vehicle involved in the accident may internally provide its own brand, type, and vehicle identification number (VIN), which may be retrieved from the onboard central electronic control unit. For detecting or estimating vehicle information of other road users, various perception systems may be used. For example, image data captured by camera systems may be processed with optical character recognition (OCR) algorithms to detect and interpret license plate numbers, which can then be resolved to external vehicle registration databases. Radar and lidar sensors may detect the dimensions, movement, and shape of other vehicles to infer type or classification. In further examples, vehicle-to-vehicle (V2V) communication, where available, may enable the exchange of vehicle metadata including type, brand, and registration identifiers between accident participants.

In some examples, the accident-relevant data may provide indicators of physical injury potential. Deployment status of one or more airbags may be interpreted as a proxy for collision severity. Seatbelt usage and belt load measurements may be detected via belt sensors and pretensioner modules. Occupant detection systems, including weight or pressure sensors in seats, may indicate the presence and physical characteristics of each occupant. Accelerometer-based measurements of deceleration and crash force may be further used to estimate the forces exerted on passengers. This injury-relevant information may be pre-filled into the digital accident report as injury severity likelihoods or binary indicators.

In some examples, vehicle damage may be automatically inferred based on structural sensor data and visual analysis. Collision detection sensors placed at the bumpers or along the vehicle perimeter may report point-of-impact and estimated severity. Vehicles equipped with strain gauges, frame-integrity sensors, or accelerometer-based structural health monitoring may detect deformation or frame damage. Additional vehicle damage indicators may be inferred from suspension-related sensor values such as abnormal wheel travel or misalignment. In some cases, camera-based image analysis of vehicle surfaces may further support the assessment of visible damage to external components, which may be used to populate structured damage fields in the digital accident report.

In some examples, the accident-relevant data may describe vehicle dynamics and maneuvers before and during the accident. These may include turning, lane changes, overtaking, reversing, roundabout entry, or parking-related actions. For example, turning maneuvers may be inferred from turn signal activation, steering angle values, and yaw rate sensor outputs. Entry or exit from parking slots or private areas may be determined using ultrasonic sensors, reverse gear state, and environmental imaging. Circulation in roundabouts may be recognized using GPS data combined with map-derived roundabout geometry, and supported by radar- or lidar-based tracking of surrounding vehicles. Lane-keeping or lane-changing behaviors may be detected using camera-based lane recognition, lane departure warnings, and blind spot detection systems.

In some examples, driving behaviors may be extracted from braking and acceleration profiles. Brake pedal position, braking force sensors, and deceleration measurements may indicate sudden braking or emergency stops. Similarly, accelerometers may capture aggressive acceleration patterns. Collision events themselves may be confirmed using impact sensors and airbag deployment records. Maneuvers such as overtaking may be identified based on radar or lidar-based detection of adjacent vehicles with relative motion and trajectory modeling. Reversing actions may be detected via reverse gear state, rear-camera activation, and ultrasonic distance measurements.

In some examples, contextual behavior such as encroachment into oncoming traffic may be derived from lane departure data, camera-based lane boundary detection, and high-definition map alignment. Approaching from the right at intersections may be detected using radar, lidar, and object detection models applied to front- or side-mounted cameras, combined with GPS-based road topology. The vehicle's failure to observe right-of-way signage may be detected through camera-based sign recognition and map-based expectation matching. Driver behavior conditions such as distraction or fatigue may be detected using driver monitoring systems including eye-tracking cameras, head pose estimation, or biometric indicators like heart rate variability.

In some examples, the method 100 may further comprise sharing the at least partially filed accident report form with a user of a second vehicle involved in the vehicle accident. In some examples, the user of the second vehicle may be another individual who was operating or otherwise authorized to use the second vehicle involved in the same vehicle accident as the user of the first vehicle. The user of the second vehicle may be the driver of the other party, a passenger with reporting rights, or a vehicle operator acting on behalf of a company or legal entity. The user of the first vehicle and the user of the second vehicle may be involved in a bilateral or multi-party reporting process in which both parties contribute to the generation and approval of a common digital accident report. This report may reflect shared factual elements such as location, accident time, observed damage, and circumstances of the event, as typically required in standardized accident documentation formats.

The sharing of the at least partially filled accident report form from the user of the first vehicle to the user of the second vehicle by transmitting the accident report form may be performed via a digital communication channel. For example, the user of the first vehicle may transmit the accident report form to the user of the second vehicle. This transmission may occur through a peer-to-peer link (e.g., Bluetooth, WLAN direct), a backend cloud service accessible by both users, or by sending an invitation link or secure token via a mobile network or messaging service. The partially filled report may be made accessible through a user interface on the user's mobile device of the user of the second vehicle, vehicle infotainment system, or a web-based platform. For example, after receiving the accident report form the user of the vehicle the user of the second may authenticate the accident report form. Further, the user of the second vehicle may view all or a subset of the pre-filled fields, with options to confirm, edit, or supplement information relevant to the second vehicle or user-specific perspective. In some examples, field-level conflicts between the two users may be resolved, such as showing side-by-side comparisons, highlighting changes, or requiring mutual confirmation for disputed entries. One or more fields of the accident report form may be pre-filled for the user of the second vehicle based on accident relevant data corresponding to the second vehicle and the user of the second vehicle as described above with regards to the vehicle and the user of the vehicle. For example, the user of the second vehicle may edit or fill some fields of the accident report form. For example, the user of the second vehicle may only review of the accident report form without filling or editing any fields.

The user of the second vehicle may input a user confirmation input for the accident report form or specific portions of it, confirming that they acknowledge and approve the included information. The user of the second vehicle may transmit the signed accident report form and/or the user information input to the user of the vehicle (for example to apparatus 700). This user information input may be appended to the accident report form as a verifiable artifact, along with a timestamp and a unique user identifier. The method 100 may comprise obtaining a user confirmation input for the user of the second vehicle. For example, the user confirmation input from the user of the second vehicle may be obtained prior to or during their interaction with the shared digital accident report form by the user of the vehicle. The user confirmation input of the suer of the second vehicle may confirm the accident report form via one or more mechanisms as described above with regards, such as a digital certificate stored in a mobile application, biometric input through a face or fingerprint scanner, a personal identification number, or a cryptographic challenge/response mechanism linked to the second vehicle's digital identity.

The method 100 may support both workflows, enabling either party to initiate, validate, and finalize the shared report. Once both users have authenticated and digitally signed the report, the method may mark the document as complete and optionally transmit it to one or more insurance companies, legal authorities, or archival services. This two-party collaboration ensures that the digital accident report reflects a mutually accepted set of facts and signatures, enabling higher evidentiary value and smoother downstream processing.

In some examples, the accident report form may be reviewed by the user of the first and the second vehicle at the same apparatus (apparatus 700) and both user confirmation input may be received by the same apparatus.

In some examples, the method 100 may further comprise transmitting the signed accident report form to at least one insurance company associated with the user of the vehicle and/or the user of the second vehicle. In some examples, transmitting the signed accident report form to at least one insurance company may comprise sending a finalized version of the digital accident report, containing user-generated data, system-generated data, and one or more user confirmation inputs or digital signatures, to a designated external insurance system. This may be initiated automatically once the report has been fully signed by the user of the vehicle and, if applicable, the user of the second vehicle. Alternatively, it may be manually triggered by either user. The transmission may occur via secure communication channels, such as HTTPS-based API calls, encrypted email, or data uploads through an insurance company's mobile app interface. The digital accident report may be transmitted as a structured data package (e.g., JSON or XML), a signed PDF document, or a hybrid format that combines a readable version with embedded sensor metadata.

This transmission may automate and accelerate the insurance claim workflow by providing the insurer with a verifiable, tamper-resistant record of the accident event. The signed report may serve as evidence that the involved parties have reviewed, filled in, and mutually confirmed the contents of the report. Further, by including digitally signed sensor-derived data - such as location, speed, braking behavior, collision detection or the like - the insurer may be able to conduct faster and more objective claim validation. The transmission of the accident report form may also include metadata such as user identifiers, report timestamps, and authentication proofs. In some examples, the method 100 may further comprise allowing the user to select the relevant insurance company based on stored policy information, or retrieve insurance contact details from the user profile or a connected service database. This may ensure that the digital accident report is not only generated and confirmed within the system, but also effectively delivered to the external stakeholder responsible for post-accident handling.

Further details and aspects are mentioned in connection with the examples described below. The example shown in Fig. 1 may include one or more optional additional features corresponding to one or more aspects mentioned in connection with the proposed concept or one or more examples described below (e.g., Figs. 2 - 7).

**Figs. 2A****,** **2B** **and 23C** schematically illustrate an example digital accident report form 200. Fig. 2A illustrates a first part of the digital accident report 200 which is to be connected at the dashed line A with the second part of the digital accident 200 as illustrated in Fig. 2B. The second part of the digital accident report 200 is to be connected to the third part of the digital accident report 200 as illustrated in Fig. 2C at the dash lined B. The accident report form 200 is structured to include multiple fields distributed across the first vehicle A and the second vehicle involved in the accident, as well as shared information sections. The illustrated accident report form 200 is representative of a standardized bilateral accident report document, which may be partially or fully pre-filled using vehicle-side or user-side data sources, and subsequently reviewed, completed, or signed by the involved users.

Reference signs 202, 204, and 206 identify portions of the accident report form that may be pre-filled automatically based on information retrieved from the vehicle system or from a user-side apparatus, such as a smartphone, tablet, or smartwatch. These may comprise structured fields such as the date and time of the accident (202), information on vehicle A (204), information on vehicle B (206). These values may be derived from vehicle sensor data, GPS position, user profiles, stored documents (e.g., scanned driver license or insurance certificate), or cloud-synchronized data sources.

Reference signs 212, 214, and 216 identify sections of the report form that may be inferred or suggested based on processed sensor data or contextual information generated by the vehicle system. These fields include for example the property damage to other vehicles or objects (212), the circumstances of the accident or maneuvers performed (214), and the graphical representation of the accident scene (216). These data points may be determined from processed sensor outputs such as acceleration, steering angle, turn signals, camera feeds, radar/lidar data, or GPS-based trajectory reconstruction, and may be proposed to the user as auto-suggestions for form completion.

Further details and aspects are mentioned in connection with the examples described above or below. The example shown in Fig. 2 may include one or more optional additional features corresponding to one or more aspects mentioned in connection with the proposed concept or one or more examples described above (e.g., Fig. 1) or below (e.g., Figs. 3 - 7).

**Figs. 3A****,** **3B** **and** **3C** schematically illustrate an example digital accident report form 300. Fig. 3A illustrates a first part of the digital accident report 300 which is to be connected at the dashed line A with the second part of the digital accident 300 as illustrated in Fig. 3B. The second part of the digital accident report 300 is to be connected to the third part of the digital accident report 300 as illustrated in Fig. 3C at the dash lined B. The accident report form 300 is structured to include additional information fields that may be relevant for a comprehensive post-accident documentation. These fields may pertain to the vehicle, driver, passengers, third-party damages, police interaction, and detailed accident circumstances. For example, the digital accident report form may be a second page to the accident report from 200 as illustrated in Fig. 2. The illustrated accident report form 300 may serve as a continuation of the digital accident report form 200 shown in Fig. 2, and may likewise be partially or fully pre-filled using vehicle-side and user-side data, or supported by auto-suggestions derived from vehicle sensor data.

Reference signs 302, 304, 306, and 308 indicate portions of the report that may be pre-filled automatically based on information retrieved from the vehicle system or a user-side apparatus, such as a smartphone, tablet, or smartwatch. This may include data such as the insured vehicle's technical and occupation information (302), use of vehicle (304), the names and addresses of other involved persons (306), and insurance company identifiers or claims details (308). These fields may be completed using data stored on the user's device, within the vehicle system, or from connected service databases.

Reference signs 312, 314, 316, and 318 denote sections of the accident report form that may be inferred or suggested based on real-time or logged vehicle sensor data. For example, owner of the vehicle (312), whether occupants were wearing seatbelts and where they were seated (314), detected property damage and damage extent (316), and environmental and behavioral context such as vehicle speed, ambient light conditions, and acceleration or braking behavior (318). These inferred values may be determined by processing data from sensors including GPS modules, seat occupancy systems, impact detection sensors, radar, lidar, accelerometers, microphones, or vehicle control unit logs. The suggested values may be presented to the user for validation, modification, or approval as part of the report completion process.

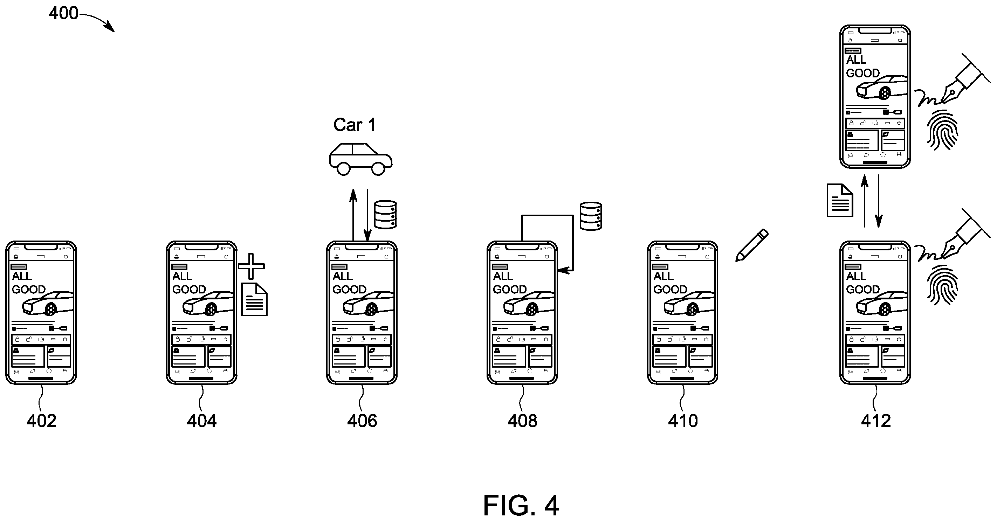

Further details and aspects are mentioned in connection with the examples described above or below. The example shown in Fig. 3 may include one or more optional additional features corresponding to one or more aspects mentioned in connection with the proposed concept or one or more examples described above (Figs. 1 - 2), or below (e.g., Figs. 4 - 7).

**Fig. 4** schematically illustrates a flowchart 400 for generating a digital accident report. For example, a Driver 1 of a first vehicle initiates and completes a digital accident report with the possibility of shared completion and signing by Driver 2 of a second vehicle, both involve in the vehicle accident. At step 402, the user-side apparatus (e.g., smartphone) operated by a Driver 1 launches a digital accident report module, for example via a mobile application connected to the vehicle (such as the MyBMW app). At step 404, the Driver 1 selects an option to generate a new digital accident report. The application may suggest a timestamp based on the latest accident detected by vehicle-side sensors, or alternatively allow the user to manually enter the date and time of the incident. At step 406, the user-side apparatus establishes a communication link with the vehicle system of the first vehicle (Car 1), using a preferred channel such as Bluetooth, NFC, WLAN, or mobile network. The apparatus retrieves accident-relevant data from the vehicle system, including sensor-derived data, vehicle identification, and user-related information. At step 408, the apparatus continues the pre-filling of the digital accident report by integrating additional data available locally on the smart device, such as user profile information, scanned documents, or previously stored vehicle data. At step 410, the Driver 1 may review, edit, and optionally supplement the pre-filled content of the report via the user interface of the apparatus. The Driver 1 may modify suggested entries, confirm inferred data, and provide additional information as required. In some examples, the device may save user-defined edits or preferences for reuse in future accident reports.

At step 412, a sharing and signing phase is performed. The digital accident report may be transmitted to Driver 2 (of a second vehicle involved in the accident) via a secure communication channel. Driver 2 may review the report on their own user-side apparatus, perform updates or corrections, and provide a digital signature. The signed report is then returned to Driver 1, who also signs it digitally. Alternatively, the report may be co-signed on a single device if both parties are physically present. The signature may comprise a manual signature via touchscreen, a biometric confirmation (e.g., fingerprint or facial recognition), a digital certificate-based signature, or an application-based identity confirmation. Optional sharing with additional trusted devices or parties is also supported, for example when the driver is not the registered vehicle owner.

Further details and aspects are mentioned in connection with the examples described above or below. The example shown in Fig. 4 may include one or more optional additional features corresponding to one or more aspects mentioned in connection with the proposed concept or one or more examples described above (Figs. 1 - 3), or below (e.g., Figs. 5 - 7).

**Fig. 5** schematically illustrates an example set of vehicle sensors 500 that may be used to generate accident-relevant data. These sensors may be integrated within a vehicle system configured to monitor dynamic, positional, and operational parameters of the vehicle, and may contribute to the automated or semi-automated pre-filling and contextualization of a digital accident report.

A headlight range sensor 501 may provide information about the alignment and activation status of the headlights at the time of the accident, supporting the reconstruction of ambient visibility conditions. A chassis level sensor 502 may indicate vehicle pitch, roll, or load-related deviations, which may be relevant for detecting abnormal vehicle dynamics during or prior to impact. A motor position sensor 503 may deliver rotation state or shaft position values, contributing to the identification of powertrain activity and mechanical engagement. A differential non-contacting angle sensor 504 may capture alignment or angle variations in the vehicle's differential system, which may support the interpretation of turn stability or axle behavior. A combination steering-torque sensor 505 may report both the steering wheel angle and the applied torque, allowing inference of intentional driver inputs, evasive maneuvers, or steering failure events.

A throttle position sensor 506 may provide data regarding the accelerator position, indicating whether acceleration or deceleration occurred just before the accident. An HVAC sensor 507 may support environmental context, such as the operational state of defrosting or climate control systems, which may be useful in cold or foggy conditions. A steering sensor 508 may further refine the measurement of steering behavior, indicating the rotational direction and rate of change, relevant for trajectory estimation. A fuel level sensor 509 may be used to record operational conditions and match crash data to the vehicle's active fuel profile, though its contribution may be auxiliary.

A wheel speed sensor 510 may deliver high-resolution rotational data for each wheel, which is critical for identifying braking behavior, wheel lock events, or traction anomalies. A mirror sensor 511 may provide position data of rear- or side-view mirrors, potentially indicating visibility adjustments or user interactions prior to impact. An accelerator pedal angle sensor 512 may deliver precise measurements of the driver's throttle intent, supporting the identification of acceleration, hesitation, or collision avoidance inputs. A transmission sensor 513 may indicate gear selection or automatic transmission state, allowing assessment of whether the vehicle was in drive, reverse, or neutral at the time of the accident.

Data from these sensors may be collected and stored by the vehicle system in real-time or on event-triggered basis and may subsequently be retrieved by a user-side apparatus executing method 100.

Further details and aspects are mentioned in connection with the examples described above or below. The example shown in Fig. 5 may include one or more optional additional features corresponding to one or more aspects mentioned in connection with the proposed concept or one or more examples described above (Figs. 1 - 4), or below (e.g., Figs. 6 - 7).

**Fig. 6** schematically illustrates a set of vehicle sensors 600 that may contribute to the generation of accident-relevant data. These sensors may capture environmental conditions, driver behavior, object proximity, impact signatures, or vehicle dynamics, thereby supporting the inference or pre-filling of specific fields in the digital accident report form.

A lane departure system 601 may detect unintentional lane changes, providing contextual information about vehicle drift or improper lane keeping at the time of the accident. A night vision system 602 may enhance visibility and detect obstacles under low-light conditions, supporting reconstruction of the visual environment. A front object CCD camera 603 may capture forward-facing video or image data useful for detecting vehicles, objects, or pedestrians in front of the vehicle prior to a collision. Front airbag sensors 604 may record the timing and intensity of airbag deployment, serving as an indicator of collision severity and passenger injury potential. An ASCD (Adaptive Speed Control Device) 605 may log cruise control status or behavior and assist in understanding vehicle speed history.

A nighttime pedestrian warning system 606 may identify pedestrians in low visibility and contribute to understanding object avoidance behavior. A drowsiness sensor 607 may monitor eye movement or driver posture and indicate driver distraction or fatigue, which may be highly relevant for liability and behavioral analysis. A front object laser radar 608 may detect distances and relative speed of forward objects, supporting detailed collision dynamics. A nighttime pedestrian IR sensor 609 may enhance detection of heat signatures and support contextualizing accident conditions in dark environments. Active park assist 610 may provide data about steering, brake, and proximity control during parking maneuvers, potentially relevant in low-speed collision contexts.

A tire pressure sensor 611 may signal under-inflation or tire failure, which may be contributory to loss of vehicle control. A rear object monitor CCD camera 612 and a rear camera 613 may capture video feed for rear surroundings, useful in rear-end collision assessments or reversing scenarios. A side curtain sensor 614 and side airbag SRS sensor 622 may both signal lateral impacts and side airbag deployment. A blind spot detection sensor 615 and cross traffic alert sensor 616 may detect nearby vehicles in blind zones or intersection movement patterns. A central computer 617 may serve as a logging and fusion unit for all sensor data, enabling timestamped consolidation and buffering for post-crash retrieval.

A rear object laser radar 618 may detect objects behind the vehicle and assist in backing accident detection. A wheel speed sensor 619 may report rotational velocity of each wheel, supporting braking event analysis. A tire pressure sensor 620 may again confirm mechanical or traction-related abnormalities. A collision sensor 621 may be a high-level impact detector used to trigger crash response systems. Adaptive cruise control 623 may log speed adjustments or braking patterns based on traffic conditions. A steering angle sensor 624 may be used to infer driver intent or evasive maneuvers. An automatic brake actuator 625 may provide data on active safety system engagement. Finally, a wheel speed sensor 626 may contribute to confirming vehicle dynamics at the time of the accident and verifying whether ABS or ESC systems were activated.

The data from these sensors may be captured in real time or buffered by the vehicle system for later retrieval by a user-side apparatus. Each type of sensor data may be semantically mapped to structured fields of the digital accident report form or used as contextual inference to propose accident dynamics, maneuvers, or vehicle conditions for user confirmation or digital authentication.

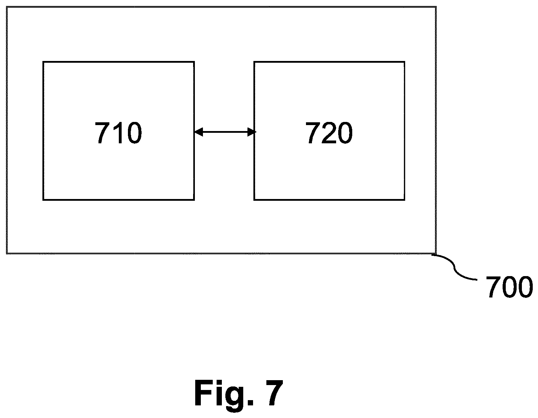

Further details and aspects are mentioned in connection with the examples described above or below. The example shown in Fig. 6 may include one or more optional additional features corresponding to one or more aspects mentioned in connection with the proposed concept or one or more examples described above (Figs. 1 - 5), or below (e.g., Fig. 7).

**Fig. 7** schematically illustrates the apparatus 700 for generating a digital accident report for a vehicle involved in a vehicle accident. The apparatus 700 comprises interface circuitry 710 and further comprises processing circuitry 720. The interface circuitry 710 may include hardware and software components configured to exchange data between the processing circuitry 720, a memory, and/or an external unit. For example, the processing circuitry 720 may include or be formed by a dedicated processor, a shared processor, or a set of processors - some or all of which may be shared - as well as a microcontroller, an application-specific integrated circuit (ASIC), an integrated circuit (IC), a system-on-chip (SoC), a programmable logic device, or a field-programmable gate array (FPGA) with an embedded microprocessor. The processor may include, for instance, a central processing unit (CPU), a graphics processing unit (GPU), a neuromorphic processor, and/or a tensor processing unit. The processing circuitry 720 may further be coupled to memory, such as read-only memory (ROM) for storing software, random-access memory (RAM), and/or non-volatile memory.

The apparatus 700 may include or be coupled to a memory configured to store instructions which, when executed by the processing circuitry 720, cause the processing circuitry 720 to perform method 100 for generating a digital accident report for a vehicle involved in a vehicle accident as described herein. The interface circuitry 710 is configured to obtain a digital accident report form. The interface circuitry 710 is further configured to obtain accident-relevant data from a vehicle system of the vehicle involved in the vehicle accident. The processing circuitry 720 is configured to determine a pre-filling of one or more fields of the digital accident report for a user of the vehicle based on the obtained accident-relevant data. Further, the interface circuitry 710 is configured to obtain a user confirmation input for the user of the vehicle.

In some examples, the apparatus 700 may be implemented as a mobile smart device, such as a smartphone, a smartwatch, a tablet, or a wearable computing unit configured to perform the steps of method 100. The apparatus 700 may execute a vehicle OEM application, such as the MyBMW App, or a dedicated software module for digital accident report generation. The interface circuitry 710 of the apparatus 700 may establish a communication link with a vehicle system of the vehicle involved in the accident using wireless protocols such as Bluetooth, WLAN, NFC, or a mobile network interface. Through this connection, the apparatus 700 may retrieve accident-relevant data such as sensor outputs, vehicle identification data, and driver profile information. Additionally, the apparatus 700 may communicate with a second apparatus operated by a user of a second vehicle involved in the same accident. This communication may be established peer-to-peer or via a cloud-based service. The apparatus 700 may transmit the at least partially completed digital accident report to the second user for review and signature, receive the second user's input or authentication, and store or forward the jointly signed report to an insurance backend. The flexibility of deploying the apparatus 700 on personal mobile devices allows for immediate post-accident interaction, remote completion of reporting steps, and secure user authentication and data exchange between involved parties.

Further details and aspects are mentioned in connection with the examples described above. The example shown in Fig. 7 may include one or more optional additional features corresponding to one or more aspects mentioned in connection with the proposed concept or one or more examples described above (e.g., Figs. 1 - 6).

Another embodiment relates to a computer program comprising program code which, when executed on a computer, a processor, or a programmable hardware component, performs a method 700 as described herein.

Another embodiment relates to a non-transitory machine-readable medium storing program code which, when executed on a computer, a processor, or a programmable hardware component, performs a method 700 as described herein.

### References

100: Method for generating a digital accident report for a vehicle involved in a vehicle accident
110: Obtaining the digital accident report form
120: Obtaining accident-relevant data from the vehicle system
130: Determining a pre-filling of the digital accident report
140: Obtaining a user confirmation input 200, 202, 204, 206, 212, 214, 216: fields of an accident report form 300, 302, 304, 306, 308, 312, 314, 316, 318: fields of an accident report form
400: Flowchart for generating a digital accident report 402, 404, 406, 408, 410, 412: Steps of the flowchart
500: Vehicle with sensors
501-513: Sensors of the vehicle
600: Vehicle with sensors
601-626: Sensors of the vehicle
700: Apparatus for generating a digital accident report for a vehicle involved in a vehicle accident
710: Interface circuitry
720: Processing circuitry

## Claims

1. A method (100) for generating a digital accident report for a vehicle involved in a vehicle accident, comprising:
obtaining (110) a digital accident report form;
obtaining (120) accident-relevant data from a vehicle system of the vehicle involved in the vehicle accident;
determining (130) a pre-filling of one or more fields of the digital accident report for a user of the vehicle based on the obtained accident-relevant data;
obtaining (140) a user confirmation input for the user of the vehicle.

2. The method (100) according to claim 1, wherein the accident-relevant data comprises at least one of: vehicle-related information or user-related information.

3. The method (100) according to any one of claims 1 to 2, wherein the accident-relevant data is vehicle-related information based on vehicle sensor data.

4. The method (100) according to claim 3, wherein determining the pre-filling of the one or more fields comprises processing the vehicle sensor data.

5. The method (100) according to any one of claims 3 to 4, wherein the sensor-derived data is collected from at least one of: a weather condition sensor, a camera system, a radar sensor, a lidar sensor, an ultrasonic sensor, a velocity sensor, an acceleration sensor, a braking sensor, a microphone, a pressure sensor, an airbag deployment sensor, a steering angle sensor, an accelerator pedal sensor, an occupancy detection system, an AI-based environment detection system for surrounding vehicles or objects, a seatbelt usage detection system, or a vehicle defect monitoring system.

6. The method (100) according to any one of 3 to 5, wherein the accident-relevant data is captured by the vehicle sensor at the time of the vehicle accident.

7. The method (100) according to any one of claims 1 to 6, wherein the accident-relevant data is user-related information, comprising at least one of: personal identification data, insurance data, or driving license information.

8. The method (100) according to claim 7, wherein the user-related information is obtained by capturing an image of at least one of: personal identification data, insurance data, or driving license information; and
performing data extraction on the captured image.

9. The method (100) according to any one of claims 7 to 8, wherein the user-related information is obtained from a stored user profile of the user of the vehicle.

10. The method (100) of any one of claims 1 to 9, further comprising:
sharing the at least partially filed accident report form with a user of a second vehicle involved in the vehicle accident; and
obtaining a user confirmation input for the user of the second vehicle.

11. The method (100) of any one of claims 1 to 10, wherein obtaining a user confirmation input from the user of the first and/or second vehicle comprises at least one of: a manual input via a touchscreen interface, a biometric authentication-based input, or a certificate-based authentication.

12. The method (100) of any one of claims 1 to 11, further comprising establishing a communication link to the vehicle system, via at least one of the following communication channel:
Bluetooth, WLAN, NFC, or a mobile network.

13. The method (100) of any one of claims 1 to 12, further comprising allowing the user of the vehicle to edit the pre-filled accident report form.

14. The method (100) of any one of claims 1 to 13, further comprising transmitting the signed accident report form to at least one insurance company associated with the user of the vehicle and/or the user of the second vehicle.

15. An apparatus (700) for generating a digital accident report for a vehicle involved in a vehicle accident, comprising:
interface circuitry (710) configured to:
obtain a digital accident report form;
obtain accident-relevant data from a vehicle system of the vehicle involved in the vehicle accident;
the apparatus (700) further comprising processing circuitry (720) configured to determine a pre-filling of one or more fields of the digital accident report for a user of the vehicle based on the obtained accident-relevant data; and
the interface circuitry (710) being further configured to obtain a user confirmation input for the user of the vehicle.
